# EUROPEAN PATENT SPECIFICATION

(11) **EP 2 785 026 B1**
(45) Date of publication and mention of the grant of the patent: **30.05.2018**
(21) Application number: 13160996.8
(22) Date of filing: 26.03.2013
(51) Int. Cl.: H04M 1/725, G06F 3/0482, H04M 1/05

(54) **Method and device for organizing attachment of ressources to a virtual screen of a mobile equipment depending on the user constraints and context**
Verfahren zur Organisation des Anhangs von Ressourcen an einen virtuellen Bildschirm eines mobilen Geräts in Abhängigkeit der Benutzereinschränkungen und des Inhalts
Procédé et dispositif pour organiser la fixation des ressources à un écran virtuel d'équipement mobile en fonction du contexte et des contraintes de l'utilisateur

(43) Date of publication of application: 01.10.2014
(73) Proprietor: Alcatel Lucent, 91620 Nozay (FR)
(72) Inventor: Turkiewicz, Pierre, 91620 Nozay (FR); Kostadinov, Dimitre Davidov, 91620 Nozay (FR); Rebierre, Nicolas, 91620 Nozay (FR)
(74) Representative: Shamsaei Far, Hassan

(56) References cited:
- EP-A1- 2 224 325
- EP-A1- 2 565 783
- EP-A2- 1 465 392
- WO-A2-2013/006654

## Description

### Technical field

The present invention relates to mobile communication equipments, and more precisely to the organization of resources into displayed virtual screens associated to workspaces of such mobile communication equipments.

In the following description, the word "resource" designates any graphical element representing at least one service that can run into or be controlled by a mobile communication equipment with a touchscreen and processing means capable of executing sets of instructions. For instance, a service can be an application or a contact shortcut.

### Background of the invention

The new generations of mobile communication equipments allow a great number of services to run in them or to be access by them through a mobile network. So, users need a way to easily access resources representing these services when they need them. This requires an organization of the resources into the different virtual screens associated to the different workspaces of the mobile communication equipments. Actually the graphical layout organization must be fully performed by the users and is frequently not optimal.

Indeed, when a user wants to access a specific resource on his mobile communication equipment, he has to perform several actions, and notably to recall what identifies the desired resource (name, icon), to which virtual screen it is attached, where it is located in this virtual screen, to identify it on the touchscreen, and to access it for example by touching it.

Moreover, access to specific resources can be made difficult by an inadequate shortcut organization done by the user. For instance, this may occur when a most needed shortcut is not displayed on the main virtual screen of the main workspace, or when a shortcut is placed at a location that is not easy to reach when the user is forced to use the hand that is holding his mobile communication equipment.

More, graphical elements presenting similarities in their representation or aspect (name or icon, for instance) or function (resource type or service provided, for instance) can also possibly mislead the user in the recall and identification phase.

Furthermore, a user might face situational constraints preventing him from efficiently identifying or accessing a graphical element. For instance, this may occur when the outside luminosity reduces the screen readability or when the user is interacting with his mobile communication equipment with the hand that is holding it.

Therefore it often takes a long time to find the most appropriate organization of graphical elements to access them easily, and such an organization does not take into account the current context or constraints of the user.

To simplify the resource organization it has been proposed to group them into folders. This allows reducing the number of top level resources on the touchscreen, but this still does not take into account the current context or constraints of the user. For instance, the touchscreen of the user's mobile communication equipment will have the same layout whether the user is holding it in his right or left hand, or it will offer the same rendering whether the user is watching it from a dark room or in plain daylight, or else it will display resources with the same look whether the user is likely to access a specific resource at a time or unlikely to access the same resource at another time.

It has been also proposed to directly access resources through vocal commands. But since voice/word recognition needs some audio surrounding requirements, resource access based on vocal commands does not work when the user is facing situational constraints where voice cannot be used.

WO2013/006654 discloses rearranging or resizing application representations on a graphical user interface of a mobile device according to both a current device context and a social context.

### Summary of the invention

So the invention aims notably at facilitating the access to key resources (or graphical elements) by automatically adapting parameters involved in the representation and access of resources to the user situational constraints and context.

To this effect the invention notably provides a method according to appended claim 1. The method according to the invention may include additional characteristics considered separately or combined, as defined in appended dependent claims 2 to 7. The invention also provides a computer program product comprising a set of instructions arranged, when it is executed by processing means, for performing a method such as the one above introduced to allow organization of the display of graphical elements, each representing at least one service, on a touchscreen of a mobile communication equipment comprising at least one workspace associated to at least one virtual screen.

The invention also provides a device intended for equipping a mobile communication equipment according to appended claim 9.

### Brief description of the figures

Other features and advantages of the invention will become apparent on examining the detailed specifications hereafter and the appended drawings, wherein:
- figure 1 schematically and functionally illustrates a mobile communication equipment comprising a device according to the invention,
- figure 2 schematically illustrates the mobile communication equipment of figure 1 with three attachment areas, adapted to a right-handed user and to a first orientation, materialized on its touchscreen,
- figure 3 schematically illustrates the mobile communication equipment of figure 1 with a first orientation and with several graphical elements attached to three attachment areas adapted to a right-handed user and to this first orientation, and
- figure 4 schematically illustrates the mobile communication equipment of figure 1 with a second orientation and with several graphical elements attached to first and second groups of attachment areas adapted respectively to right and left hands of a user and to this second orientation.

### Detailed description of the preferred embodiment

The appended drawings may serve not only to complete the invention, but also to contribute to its understanding, if need be.

The invention aims, notably, at offering a method, and an associated device D, intended for automatically organizing display of graphical elements (or resources) GEi, each representing at least one service, on a touchscreen TS of a mobile communication equipment EE comprising at least one workspace WS associated to at least one virtual screen VS.

In the following description it will be considered, as an example, that the mobile communication equipment EE is a smartphone. But the invention is not limited to this type of mobile communication equipment. Indeed, it concerns any type of mobile communication equipment comprising a touchscreen TS and at least one workspace WS. So, it could be also a personal digital assistant, an electronic tablet, or a game console, or else a connected (or smart) television.

Moreover, in the following description it will be considered, as an example, that the graphical elements (or resources) GEi are icons. But the invention is not limited to this type of graphical element (or resource). Indeed, it concerns any type of graphical element (or resource) representing at least one service that can run into or be controlled by a mobile communication equipment, and notably applications, telephonic contacts, GPS destinations, pictures, videos, actions (such as switching off the electronic equipment, for instance), files or shortcuts to external resources. So, it could be also a widget, for instance.

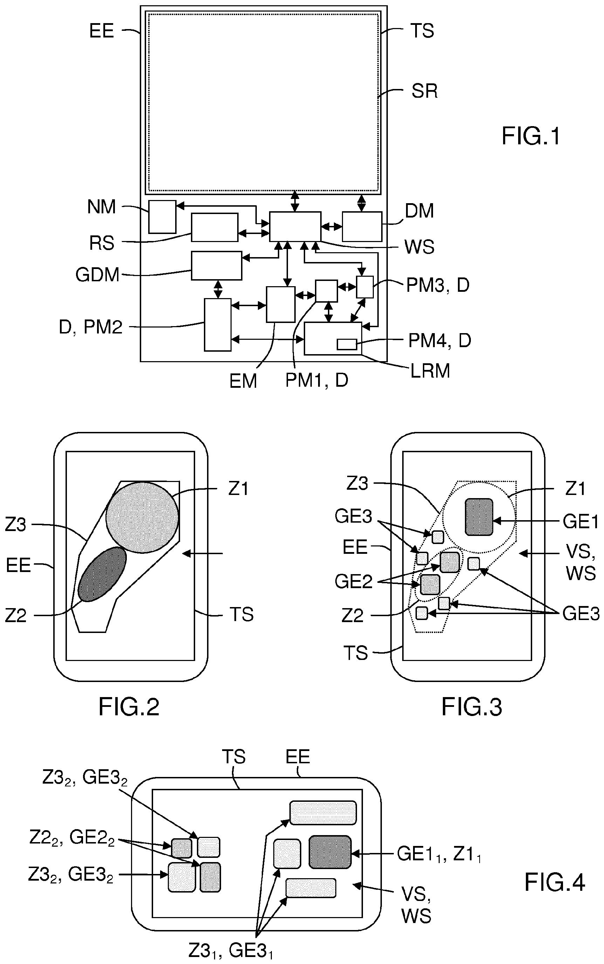

As illustrated in figure 1, a mobile communication equipment EE according to the invention comprises at least a touchscreen TS, associated with sensors SR, a display module DM, a resource manager RS, a network module NM, at least one workspace WS, an environment module EM, a local gesture detection module GDM, a layout and rendering decision module LRM, and a device D.

The display module DM is responsible for the display on the touchscreen TS, for the generation of audio output, and for any other feedback (such as vibrations).

The sensors SR are responsible for the capture of events concerning the mobile communication equipment EE and notably relative to user interactions, for instance with the touchscreen TS. It provides notably acceleration, orientation (pitch, roll, azimuth) and position (latitude, longitude, height) of the mobile communication equipment EE, and audio and video captures.

The resource manager RS is arranged for providing an abstraction layer for the different classes of graphical elements (or resources) GEi that represent service(s) running into or controllable by the mobile communication equipment EE and that may be attached, directly or indirectly, to virtual screen(s) VS associated to workspace(s) WS of this mobile communication equipment EE.

Here, the word "attached" means anchored or bound to a graphical area of the virtual display space.

The network module NM is arranged for providing network connectivity to the mobile communication equipment EE.

Each workspace WS is responsible for allowing the user to organize the access to at least key graphical elements GEi, and handles events from the user (sensor) and from the layout and rendering decision module LRM to control the display of graphical elements GEi to the user.

The local gesture detection module GDM is responsible for detecting fragments of gestures based on information relative to user interaction events detected by the sensors SR. For instance, it may recognize user gesture fragments and the user hand that holds the mobile communication equipment EE.

The environment module EM is arranged for providing access to a knowledge base about the surrounding environment and social environment of the user. Such a knowledge base can be, for instance, a third party database exposed as a service accessible through the mobile network.

The layout and rendering decision module LRM is in charge of the graphical layout and rendering of graphical elements GEi on the touchscreen TS. It takes into account the status of a user gesture and applies an appropriate feedback (haptic, sound, animation, for instance) on the operated graphical elements GEi.

As mentioned above, the invention proposes notably a method intended for automatically organizing display of graphical elements (or resources) GEi on the touchscreen TS of the mobile communication equipment EE.

This method comprises two steps (i) and (ii).

The method steps may be implemented by first PM1, second PM2, third PM3 and fourth PM4 processing means (or modules) of the device D.

For instance and as illustrated in the non-limiting example of figure 1:
- the first processing means (or module) PM1 may be coupled to the environment module EM, the third processing means (or module) PM3 and the layout and rendering decision module LRM,
- the second processing means (or module) PM2 may be coupled to the local gesture detection module GDM, the environment module EM and the layout and rendering decision module LRM,
- the third processing means (or module) PM3 may be coupled to the workspace(s) WS, the first processing means (or module) PM1 and the layout and rendering decision module LRM, and
- the fourth processing means (or module) PM4 may be located into the layout and rendering decision module LRM, which is notably coupled to the workspace(s) WS.

So, this device D may be made of software modules (and in this case it constitutes a computer program product comprising a set of instructions arranged for performing the method when it is executed by processing means of the mobile communication equipment EE). But this is not mandatory. Indeed, it may be made of a combination of electronic circuit(s) (or hardware module(s)) and software modules.

During step (i) of the method one determines a current user context from first information, current situational constraint(s) of the mobile communication equipment EE from second information, and, for at least chosen ones of the graphical elements GEi (stored into the mobile communication equipment EE), probabilities to be accessed by the user in this determined current context.

This step (i) is performed by the first PM1, second PM2 and third PM3 processing means (or modules) of the device D. More precisely, the first processing means PM1 is arranged for determining the current user context from first information, the second processing means PM2 is arranged for determining current situational constraint(s) of the mobile communication equipment EE from second information, and the third processing means PM3 is arranged for determining, for at least chosen ones of the graphical elements GEi, probabilities to be accessed by the user in the determined current context.

This third processing means PM3 may be also arranged for capturing local user resource access events, and for sharing resource access events between its mobile communication equipment EE and distant communication devices. So, it determines resources accessed by the user over time. To determine the probability of access to a resource, the third processing means PM3 may not only take into account the current user context and the past resources accessed by the user, but also surrounding environment data and social environment data.

For instance, the current user context is a context in which the user is currently immersed, i.e. a situation involving the user within a time period and/or at a location and/or in a set of activities and/or with a set of people. So, a context may be defined by an activity (work, sport, shopping, spectacle, show, meeting (registered in a user's agenda)) and/or a location (office, home, theater, concert hall, cinema) and/or a current time (dawn time, dusk time, breakfast time, lunch time, dinner time), and/or people in the vicinity of the user (working colleagues, friends, family), for instance.

It is important to note that a first information may be a user habit, a user surrounding environment, or a user social environment, for instance.

A user surrounding environment may be a current local weather, a current local temperature, a current light intensity, or point(s) of interest in the vicinity of the user (restaurant, bars, malls, libraries, theaters, cinemas, concert halls), for instance.

A social environment may be a position of a friend located in the vicinity of the user, a position of a working colleague located in the vicinity of the user, an event of interest for the user, resources accessed by people located in the vicinity of the user and in the same time as the user, or the address of a user's relative, for instance.

A situational constraint can be described as characteristics of the environment limiting the interaction of the user with his mobile communication equipment EE. This typically involves four senses through which users interact with their mobile communication equipments EE: touch, speech, hearing, and vision.

It is also important to note that a second information may be a detected user finger gesture (fragment) or environment data.

An environment data is an interaction constraint relative to limitations on user's interaction capabilities (touch, speech, hearing, vision). So, it may be an ability to touch a graphical element GEi, an ability to click on a graphical element GEi, an ability to slide a graphical element GEi or a virtual screen VS, an ability to be heard by the mobile communication equipment EE, an ability to listen to the mobile communication equipment EE, an ability to recognize a picture, or an ability to recognize a color.

During step (ii) of the method one attaches the chosen graphical elements GEi to areas of a displayed virtual screen VS depending on their respective access probabilities, the current situational constraints and the current user context, determined in step (i). So, this step (ii) is intended for easing access to the chosen graphical elements GEi to the user.

This step (ii) is performed by the fourth processing means (or module) PM4 of the device D.

Preferably, during this step (ii) one may determine a display size and/or a display aspect (or appearance) for each of the chosen graphical elements GEi to ease their respective identifications by the user. The parameters of the aspect (or appearance) may be opacity and/or background image and/or position on the touchscreen TS and/or contrast and/or touch perception (texture, thickness, temperature, shape).

Moreover, and as illustrated in the non-limiting example of figure 2, several areas Zk may be defined in the displayed virtual screen VS and dedicated respectively to several groups of graphical elements GEi associated to different intervals of probabilities to be accessed by the user.

The respective locations of these different attachment areas Zk preferably depend on the orientation (portrait type or landscape type) of the mobile communication equipment EE. This is notably the case in the example illustrated in figure 2, where the area locations are well adapted to the case where the mobile communication equipment EE is hold by a right-handed user.

For instance, a chosen graphical element GE1 associated to an access probability belonging to a highest access probability interval may be attached to a first area Z1 (k = 1) that is the easier to be touched by a thumb of a user hand that holds the mobile communication equipment EE, another chosen graphical element GE2 associated to an access probability belonging to an access probability interval smaller than the highest one may be attached to a second area Z2 (k = 2) that can be easily touched by a thumb of a user hand that holds the mobile communication equipment EE, and still another chosen graphical element GE3 associated to an access probability belonging to another access probability interval still smaller than the highest one is attached to a third area Z3 (k = 3) that can be relatively easily touched by a thumb of a user hand that holds the mobile communication equipment EE.

A non-limiting example of display of chosen graphical elements GEi in three attachment areas Zk (k = 1 to 3) is illustrated in figure 3. This example corresponds to a case where the mobile communication equipment EE has a first orientation (portrait type) and is hold by a right-handed user. In this first example, a single graphical element GE1 most likely to be accessed by the user has been attached to the first attachment area Z1 of a displayed virtual screen VS, two different graphical elements GE2 quite likely to be accessed by the user have been attached to the second attachment area Z2 of the displayed virtual screen VS, and five different graphical elements GE3 lesser likely to be accessed by the user have been attached to the third attachment area Z3 of the displayed virtual screen VS.

Another non-limiting example of display of chosen graphical elements GEi in three attachment areas Zk (k = 1 to 3) is illustrated in figure 4. This second example corresponds to a case where the mobile communication equipment EE has a second orientation (landscape type) and is hold by the two hands of a right-handed user. In this second example, the right side of the virtual screen VS is dedicated to the thumb of the user right hand and the left side of the virtual screen VS is dedicated to the thumb of the user left hand. The right side comprises a first attachment area (Z1₁) comprising a single graphical element GE1₁ most likely to be accessed by the user, and a third attachment area (Z3₁) surrounding the first attachment area (Z1₁) and comprising three different graphical elements GE3₁ lesser likely to be accessed by the user. The left side comprises two second attachment areas (Z2₂), each comprising a single graphical element GE2₂ quite likely to be accessed by the user, and two third attachment areas (Z3₂), each comprising a single graphical element GE3₂ lesser likely to be accessed by the user.

An example of scenario of use of the invention could be the display of resource shortcuts GEi in a situation where a right-handed user has the habit of having lunch in restaurants around his office, generally using a specific restaurant guide application (represented by a graphical element GE1) to select its restaurant, and located at noon in his office. This scenario begins when the user picks his mobile communication equipment EE with his right hand. Then the local gesture detection module GDM identifies a fragment of gesture corresponding to the phone being picked-up with a right hand. Then the first processing means PM1 identifies the user as being in its lunch context, characterized by the weekdays, the lunch time (noon to 2pm time period), and the office area location. Then the environment module EM retrieves the list of neighboring restaurants from the network (through the network module NM). Then the third processing means PM3 determines the access probabilities associated to each chosen resource shortcut configured by the user on the touchscreen TS of his mobile communication equipment EE (it is supposed that the restaurant guide application shortcut obtains the highest access probability). Then the second processing means PM3 determines that the user can only interact with his right thumb, pivoting from the bottom right edge of the mobile communication equipment EE. Then the fourth processing means PM4 of the layout and rendering decision module LRM selects appropriate positions for the various resource shortcuts on the mobile touchscreen TS, avoiding spaces hard to reach for the user thumb, and placing the restaurant guide application shortcut GE1 on the displayed virtual screen VS at the position that is the most easily touchable by the right hand thumb and by highlighting it. For instance, the size of the resource shortcut size is chosen to put emphasis on the probability that the user will access it. Then the workspace WS updates the display to show the chosen resource shortcuts following the layout and rendering parameters decided by the layout and rendering decision module LRM in combination with the fourth processing means PM4.

The invention allows organizing and rendering resources that a user can access on his mobile communication equipment, based on the likelihood that the user needs to access them, and on the way the user is likely to interact with his mobile communication equipment. It allows also minimizing the effort required by a user to identify and access resources on his mobile communication equipment, by reducing the time needed to identify a desired resource, and the distance needed to access this desired resource with a finger.

The invention is not limited to the embodiments of method, device and mobile communication equipment described above, only as examples, but it encompasses all alternative embodiments which may be considered by one skilled in the art within the scope of the claims hereafter.

## Claims

1. Method for organizing display of graphical elements (GEi), each graphical element representing at least one service, on a touchscreen (TS) of a mobile communication equipment (EE) of a user comprising at least one workspace (WS) associated to at least one virtual screen (VS) to which said graphical elements (GEi) can be attached, said mobile communication equipment further comprising a sensor (SR) configured for capturing events concerning the mobile communication equipment and a gesture detection module (GDM) configured for detecting fragments of gestures based on information relative to user interaction events detected by the sensor (SR), and a user hand that holds the mobile communication equipment when the user holds said mobile communication equipment, said method comprising:
• a step (i) of determining:
∘ a current user context from first information, said current user context being a context in which the user is currently immersed chosen from a group comprising at least an activity, a location, and a current time,
∘ current situational constraint(s) from second information, said current situational constraint(s) being characteristics of the environment limiting the interaction of the user with the mobile communication equipment (EE), each second information being chosen from a group consisting of detected interaction constraints relative to limitations of the user's interaction capabilities with said mobile communication equipment involving at least one of: touch, speech, hearing and vision,
∘ and, for at least chosen ones of said graphical elements (GEi), probabilities to be accessed by said user in said current user context,
• and a step (ii) of attaching said chosen graphical elements (GEi) to areas of a displayed virtual screen (VS) depending on their respective access probabilities, said current situational constraints and said current user context, to ease access to said chosen graphical elements (GEi) by said user and wherein a chosen graphical element (GEi) associated to a highest access probability interval is attached to a first area that is the easiest to be touched by a thumb of the user hand that holds said mobile communication equipment (EE), a chosen graphical element (GEi) associated to an access probability interval smaller than the highest one is attached to a second area that can be easily touched by a thumb of the user hand that holds said mobile communication equipment (EE), and a chosen graphical element (GEi) associated to an access probability interval still smaller than the highest one is attached to a third area that can be relatively easily touched by a thumb of the user hand that holds said mobile communication equipment (EE), wherein respective locations of said first, second and third areas are determined depending on at least the user hand that holds the mobile communication equipment.

2. Method according to claim 1, wherein during step (ii) a display size and/or a display aspect for each of said chosen graphical elements (GEi) is determined to ease their respective identifications by said user.

3. Method according to one of claims 1 to 3, wherein in step (i) each first information is chosen from a group comprising at least a user habit, a user surrounding environment, and a user social environment.

4. Method according to claim 4, wherein said user surrounding environment is chosen from a group comprising at least a current local weather, a current local temperature, a current light intensity, and point(s) of interest in the vicinity of said user.

5. Method according to one of claims 4 and 5, wherein in step (i) said social environment is chosen from a group comprising at least positions of user's friends, positions of user's working colleagues, events of interests for said user, and addresses of user's relatives.

6. Method according to one of claims 1 to 5, wherein, in step (i), said detected interaction constraints with said mobile communication equipment are obtained through the detection of user finger gestures by sensors.

7. Method according to one of claims 1 to 6, wherein, in step (i), said detected interaction constraints with said mobile communication equipment are obtained from environment data chosen from a group comprising at least an ability to touch a graphical element (GEi), an ability to click on a graphical element (GEi), an ability to slide a graphical element (GEi) or a virtual screen (VS), an ability to be heard by said mobile communication equipment (EE), an ability to listen to said mobile communication equipment (EE), an ability to recognize a picture, and an ability to recognize a color.

8. Computer program product comprising a set of instructions arranged, when it is executed by processing means, for performing the method according to one of the preceding claims to allow organization of the display of graphical elements (GEi), each representing at least one service, on a touchscreen (TS) of a mobile communication equipment (EE) comprising at least one workspace (WS) associated to at least one virtual screen (VS).

9. Device (D) for a mobile communication equipment (EE) comprising a touchscreen (TS) and at least one workspace (WS) associated to at least one virtual screen (VS) to which graphical elements (GEi) can be attached, each graphical element representing at least one service, said mobile communication equipment further comprising a sensor (SR) configured for capturing events concerning the mobile communication equipment and a gesture detection module (GDM) configured for detecting fragments of gestures based on information relative to user interaction events detected by the sensor (SR) and a user hand that holds the mobile communication equipment when the user holds said mobile communication equipment, said device (D) comprising:
i) a first processing means (PM1) arranged for determining a current user context from first information, said current user context being a context in which the user is currently immersed, chosen from a group comprising at least an activity, a location, and a current time,
ii) a second processing means (PM2) arranged for determining current situational constraint(s) from second information, said current situational constraint(s) being characteristics of the environment limiting the interaction of the user with the mobile communication equipment (EE), each second information being chosen from a group consisting of detected interaction constraints relative to limitations of the user's interaction capabilities with said mobile communication equipment involving at least one of: touch, speech, hearing and vision,
iii) a third processing means (PM3) arranged for determining, for at least chosen ones of said graphical elements (GEi), probabilities to be accessed by said user in said user current context,
and iv) a fourth processing means (PM4) arranged for attaching said chosen graphical elements (GEi) to areas of a displayed virtual screen (VS) depending on their respective access probabilities, said current situational constraints and said current user context, to ease access to said chosen graphical elements (GEi) by said user and with a chosen graphical element (GEi) associated to a highest access probability interval being attached to a first area that is the easiest to be touched by a thumb of a user hand that holds said mobile communication equipment (EE), a chosen graphical element (GEi) associated to an access probability interval smaller than the highest one being attached to a second area that can be easily touched by a thumb of a user hand that holds said mobile communication equipment (EE), and a chosen graphical element (GEi) associated to an access probability interval still smaller than the highest one being attached to a third area that can be relatively easily touched by a thumb of a user hand that holds said mobile communication equipment (EE), with respective locations of said first, second and third areas being determined depending on at least the user hand that holds the mobile communication equipment.

## Patentansprüche

1. Verfahren zum Ordnen der Anzeige grafischer Elemente (GEi), wobei jedes grafische Element wenigstens einen Dienst darstellt, auf einem Touchscreen (TS) eines mobilen Kommunikationsgeräts (EE) eines Benutzers, umfassend wenigstens einen Arbeitsbereich (WS), der zu wenigstens einem virtuellen Bildschirm (VS) zugehörig ist, an den die grafischen Elemente (GEi) angeheftet werden können, wobei das besagte mobile Kommunikationsgerät ferner einen Sensor (SR), der zum Erfassen von Ereignissen konfiguriert ist, die das mobile Kommunikationsgerät betreffen, und ein Gestenerfassungsmodul (GDM) umfasst, das zum Erfassen von Fragmenten von Gesten aufbauend auf Informationen im Zusammenhang mit Benutzerinteraktionsereignissen konfiguriert ist, die von dem Sensor (SR) erfasst werden, und eine Benutzerhand, die das mobile Kommunikationsgerät hält, wenn der Benutzer das mobile Kommunikationsgerät hält, wobei das Verfahren Folgendes umfasst:
▪ einen Schritt (i) des Bestimmens:
∘ eines aktuellen Benutzerkontexts aus ersten Informationen, wobei der besagte aktuelle Benutzerkontext ein Kontext ist, in dem sich der Benutzer aktuell befindet, ausgewählt aus einer Gruppe, die wenigstens eine Aktivität, eine Position und eine aktuelle Zeit umfasst,
∘ einer oder mehrerer aktueller situationsbedingte(r) Einschränkung(en) aus zweiten Informationen, wobei besagte aktuelle situationsbedingte(r) Einschränkung(en) Eigenschaften der Umgebung sind, die die Interaktion des Benutzers mit dem mobilen Kommunikationsgerät (EE) einschränken, wobei jeweilige zweite Informationen ausgewählt werden aus einer Gruppe bestehend aus erfassten Interaktionseinschränkungen im Zusammenhang mit Einschränkungen der Interaktionsfähigkeiten des Benutzers mit besagtem mobilen Kommunikationsgerät, die wenigstens eins der folgenden einschließen: Berührung, Sprache, Gehör und Sicht,
∘ und, für wenigstens ausgewählte der besagten grafischen Elemente (GEi), Wahrscheinlichkeiten, dass von besagtem Benutzer im besagten aktuellen Benutzerkontext darauf zugegriffen wird,
▪ und einen Schritt (ii) des Anheftens besagter ausgewählter grafischer Elemente (GEi) an Bereiche eines angezeigten virtuellen Bildschirms (VS) in Abhängigkeit von ihren jeweiligen Zugriffswahrscheinlichkeiten, den besagten aktuellen situationsbedingten Einschränkungen und dem besagten aktuellen Benutzerkontext, um den Zugriff auf die besagten ausgewählten grafischen Elemente (GEi) durch besagten Benutzer zu erleichtern, und wobei ein ausgewähltes grafisches Element (GEi), dem ein höchstes Zugriffswahrscheinlichkeitsintervall zugeordnet ist, an einen ersten Bereich angeheftet wird, der am leichtesten von einem Daumen der Benutzerhand zu berühren ist, die das besagte mobile Kommunikationsgerät (EE) hält, ein ausgewähltes grafisches Element (GEi), das einem Zugriffswahrscheinlichkeitsintervall zugeordnet ist, das kleiner als das höchste ist, an einen zweiten Bereich angeheftet wird, der leicht von einem Daumen der Benutzerhand zu berühren ist, die das besagte mobile Kommunikationsgerät (EE) hält, und ein ausgewähltes grafisches Element (GEi), das einem Zugriffswahrscheinlichkeitsintervall zugeordnet ist, das noch kleiner als das höchste ist, an einen dritten Bereich angeheftet wird, der relativ leicht von einem Daumen der Benutzerhand zu berühren ist, die das besagte mobile Kommunikationsgerät (EE) hält, wobei jeweilige Positionen des besagten ersten, zweiten und dritten Bereichs in Abhängigkeit von wenigstens der Benutzerhand bestimmt werden, die das mobile Kommunikationsgerät hält.

2. Verfahren nach Anspruch 1, wobei während des Schritts (ii) eine Anzeigegröße und/oder ein Anzeigeseitenverhältnis für jedes der besagten ausgewählten grafischen Elemente (GEi) bestimmt wird, um jeweilige Erkennungen durch besagten Benutzer zu erleichtern.

3. Verfahren nach einem der Ansprüche 1 bis 3, wobei in Schritt (i) die jeweiligen ersten Informationen ausgewählt werden aus einer Gruppe, die wenigstens eine Benutzergewohnheit, eine Benutzeraufenthaltsumgebung und eine soziale Benutzerumgebung umfasst.

4. Verfahren nach Anspruch 4, wobei die besagte Benutzeraufenthaltsumgebung ausgewählt wird aus einer Gruppe, die wenigstens ein aktuelles lokales Wetter, eine aktuelle lokale Temperatur, eine aktuelle Lichtstärke und einen oder mehrere Punkt(e) von Interesse in der Nachbarschaft des besagten Benutzers umfasst.

5. Verfahren nach einem der Ansprüche 4 und 5, wobei in Schritt (i) besagte soziale Umgebung ausgewählt wird aus einer Gruppe, die wenigstens Positionen von Freunden des Benutzers, Positionen von Arbeitskollegen des Benutzers, Ereignisse, die für besagten Benutzer von Interesse sind, und Adressen von Verwandten des Benutzers umfasst.

6. Verfahren nach einem der Ansprüche 1 bis 5, wobei in Schritt (i) besagte erfasste Interaktionseinschränkungen mit besagtem mobilen Kommunikationsgerät durch die Erfassung von Benutzerfingergesten durch Sensoren erlangt werden.

7. Verfahren nach einem der Ansprüche 1 bis 6, wobei in Schritt (i) besagte erfasste Interaktionseinschränkungen mit besagtem mobilen Kommunikationsgerät aus Umgebungsdaten erlangt werden, die ausgewählt werden aus einer Gruppe, die wenigstens eine Fähigkeit, ein grafisches Element (GEi) zu berühren, eine Fähigkeit, auf ein grafisches Element (GEi) zu klicken, eine Fähigkeit, ein grafisches Element (GEi) oder einen virtuellen Bildschirm (VS) durch Wischen zu verschieben, eine Fähigkeit, von besagtem mobilen Kommunikationsgerät (EE) gehört zu werden, eine Fähigkeit, besagtem mobilem Kommunikationsgerät (EE) zuzuhören, eine Fähigkeit, ein Bild zu erkennen, und eine Fähigkeit, eine Farbe zu erkennen, umfasst.

8. Computerprogrammprodukt, umfassend einen Satz von Befehlen, die dazu vorgesehen sind, bei Ausführung derselben durch ein Verarbeitungsmittel das Verfahren nach einem der vorangehenden Ansprüche durchzuführen, um ein Ordnen der Anzeige grafischer Elemente (GEi), die jeweils wenigstens einen Dienst darstellen, auf einem Touchscreen (TS) eines mobilen Kommunikationsgeräts (EE) zuzulassen, das wenigstens einen Arbeitsbereich (WS) umfasst, der wenigstens einem virtuellen Bildschirm (VS) zugehörig ist.

9. Vorrichtung (D) für ein mobiles Kommunikationsgerät (EE), das einen Touchscreen (TS) und wenigstens einen Arbeitsbereich (WS) umfasst, der wenigstens einem virtuellen Bildschirm (VS) zugehörig ist, an den grafische Elemente (GEi) angeheftet werden können, wobei jedes grafische Element wenigstens einen Dienst darstellt, wobei besagtes mobiles Kommunikationsgerät ferner einen Sensor (SR), der zum Erfassen von Ereignissen konfiguriert ist, die das mobile Kommunikationsgerät betreffen, und ein Gestenerfassungsmodul (GDM) umfasst, das zum Erfassen von Fragmenten von Gesten aufbauend auf Informationen im Zusammenhang mit Benutzerinteraktionsereignissen konfiguriert ist, die von dem Sensor (SR) erfasst werden, und eine Benutzerhand, die das mobile Kommunikationsgerät hält, wenn der Benutzer das mobile Kommunikationsgerät hält, wobei die Vorrichtung (D) Folgendes umfasst:
i) ein erstes Verarbeitungsmittel (PM1), das zum Bestimmen eines aktuellen Benutzerkontexts aus ersten Informationen vorgesehen ist, wobei der besagte aktuelle Benutzerkontext ein Kontext ist, in dem sich der Benutzer aktuell befindet, ausgewählt aus einer Gruppe, die wenigstens eine Aktivität, eine Position und eine aktuelle Zeit umfasst,
ii) ein zweites Verarbeitungsmittel (PM2), das zum Bestimmen einer oder mehrerer aktueller situationsbedingte(r) Einschränkung(en) aus zweiten Informationen vorgesehen ist, wobei besagte aktuelle situationsbedingte(r) Einschränkung(en) Eigenschaften der Umgebung sind, die die Interaktion des Benutzers mit dem mobilen Kommunikationsgerät (EE) einschränken, wobei jeweilige zweite Informationen ausgewählt werden aus einer Gruppe bestehend aus erfassten Interaktionseinschränkungen im Zusammenhang mit Einschränkungen der Interaktionsfähigkeiten des Benutzers mit besagtem mobilen Kommunikationsgerät, die wenigstens eins der folgenden einschließen: Berührung, Sprache, Gehör und Sicht,
iii) ein drittes Verarbeitungsmittel (PM3), das, für wenigstens ausgewählte der besagten grafischen Elemente (GEi), zum Bestimmen von Wahrscheinlichkeiten vorgesehen ist, dass von besagtem Benutzer im besagten aktuellen Benutzerkontext darauf zugegriffen wird,
und iv) ein viertes Verarbeitungsmittel (PM4), das zum Anheften besagter ausgewählter grafischer Elemente (GEi) an Bereiche eines angezeigten virtuellen Bildschirms (VS) in Abhängigkeit von ihren jeweiligen Zugriffswahrscheinlichkeiten, den besagten aktuellen situationsbedingten Einschränkungen und dem besagten aktuellen Benutzerkontext vorgesehen ist, um den Zugriff auf die besagten ausgewählten grafischen Elemente (GEi) durch besagten Benutzer zu erleichtern, und wobei ein ausgewähltes grafisches Element (GEi), dem ein höchstes Zugriffswahrscheinlichkeitsintervall zugeordnet ist, an einen ersten Bereich angeheftet wird, der am leichtesten von einem Daumen einer Benutzerhand zu berühren ist, die das besagte mobile Kommunikationsgerät (EE) hält, ein ausgewähltes grafisches Element (GEi), das einem Zugriffswahrscheinlichkeitsintervall zugeordnet ist, das kleiner als das höchste ist, an einen zweiten Bereich angeheftet wird, der leicht von einem Daumen einer Benutzerhand zu berühren ist, die das besagte mobile Kommunikationsgerät (EE) hält, und ein ausgewähltes grafisches Element (GEi), das einem Zugriffswahrscheinlichkeitsintervall zugeordnet ist, das noch kleiner als das höchste ist, an einen dritten Bereich angeheftet wird, der relativ leicht von einem Daumen einer Benutzerhand zu berühren ist, die das besagte mobile Kommunikationsgerät (EE) hält, wobei jeweilige Positionen des besagten ersten, zweiten und dritten Bereichs in Abhängigkeit von wenigstens der Benutzerhand bestimmt werden, die das mobile Kommunikationsgerät hält.

## Revendications

1. Procédé pour organiser l'affichage d'éléments graphiques (GEi), chaque élément graphique représentant au moins un service, sur un écran tactile (TS) d'un équipement de communication mobile (EE) d'un utilisateur comprenant au moins un espace de travail (WS) associé à au moins un écran virtuel (VS) auquel lesdits éléments graphiques (GEi) peuvent être rattachés, ledit équipement de communication mobile comprenant en outre un capteur (SR) configuré pour capturer des événements concernant l'équipement de communication mobile et un module de détection de gestes (GDM) configuré pour détecter des fragments de gestes sur la base d'informations relatives à des événements d'interaction d'utilisateur détectés par le capteur (SR), et une main d'utilisateur qui tient l'équipement de communication mobile lorsque l'utilisateur tient ledit équipement de communication mobile, ledit procédé comprenant :
• une étape (i) de détermination :
∘ d'un contexte d'utilisateur actuel à partir d'une première information, ledit contexte d'utilisateur actuel étant un contexte dans lequel l'utilisateur est actuellement immergé choisi dans un groupe comprenant au moins une activité, une localisation, et une heure actuelle,
∘ d'une(de) contrainte(s) situationnelle(s) actuelle(s) à partir d'une seconde information, ladite(lesdites) contrainte(s) situationnelle(s) actuelle(s) étant des caractéristiques de l'environnement limitant l'interaction de l'utilisateur avec l'équipement de communication mobile (EE), chaque seconde information étant choisie dans un groupe se composant de contraintes d'interaction détectées relatives à des limitations des capacités d'interaction de l'utilisateur avec ledit équipement de communication mobile impliquant au moins un parmi : le toucher, la parole, l'ouïe et la vision,
∘ et, pour au moins des éléments choisis desdits éléments graphiques (GEi), de probabilités de faire l'objet d'un accès par ledit utilisateur dans ledit contexte d'utilisateur actuel,
• et une étape (ii) de rattachement desdits éléments graphiques (GEi) choisis à des zones d'un écran virtuel (VS) affiché en fonction de leur probabilité d'accès respective, desdites contraintes situationnelles actuelles et dudit contexte d'utilisateur actuel, pour faciliter l'accès auxdits éléments graphiques (GEi) choisis par ledit utilisateur et où un élément graphique (GEi) choisi associé à un intervalle de probabilité d'accès le plus élevé est rattaché à une première zone qui est la plus facile à toucher par un pouce de la main d'utilisateur qui tient ledit équipement de communication mobile (EE), un élément graphique (GEi) choisi associé à un intervalle de probabilité d'accès plus petit que le plus élevé est rattaché à une deuxième zone qui peut être touchée facilement par un pouce de la main d'utilisateur qui tient ledit équipement de communication mobile (EE), et un élément graphique (GEi) choisi associé à un intervalle de probabilité d'accès encore plus petit que le plus élevé est rattaché à une troisième zone qui peut être touchée relativement facilement par un pouce de la main d'utilisateur qui tient ledit équipement de communication mobile (EE), où des localisations respectives desdites première, deuxième et troisième zones sont déterminées en fonction au moins de la main d'utilisateur qui tient l'équipement de communication mobile.

2. Procédé selon la revendication 1, dans lequel au cours de l'étape (ii) une taille d'affichage et/ou un aspect d'affichage pour chacun desdits éléments graphiques (GEi) choisis est (sont) déterminé(e)(s) pour faciliter leur identification respective par ledit utilisateur.

3. Procédé selon l'une des revendications 1 à 3, dans lequel à l'étape (i) chaque première information est choisie dans un groupe comprenant au moins une habitude d'utilisateur, un environnement alentour d'utilisateur, et un environnement social d'utilisateur.

4. Procédé selon la revendication 4, dans lequel ledit environnement alentour d'utilisateur est choisi dans un groupe comprenant au moins un temps local actuel, une température locale actuelle, une intensité lumineuse actuelle, et un(des) point(s) d'intérêt dans le voisinage dudit utilisateur.

5. Procédé selon l'une des revendications 4 et 5, dans lequel à l'étape (i) ledit environnement social est choisi dans un groupe comprenant au moins des positions d'amis de l'utilisateur, des positions de collègues de travail de l'utilisateur, des événements d'intérêt pour ledit utilisateur, et des adresses de parents de l'utilisateur.

6. Procédé selon l'une des revendications 1 à 5, dans lequel, à l'étape (i), lesdites contraintes d'interaction détectées avec ledit équipement de communication mobile sont obtenues par l'intermédiaire de la détection de gestes de doigt d'utilisateur par des capteurs.

7. Procédé selon l'une des revendications 1 à 6, dans lequel, à l'étape (i), lesdites contraintes d'interaction détectées avec ledit équipement de communication mobile sont obtenues à partir de données d'environnement choisies dans un groupe comprenant au moins une capacité à toucher un élément graphique (GEi), une capacité à cliquer sur un élément graphique (GEi), une capacité à faire glisser un élément graphique (GEi) ou un écran virtuel (VS), une capacité à être entendu par ledit équipement de communication mobile (EE), une capacité à écouter ledit équipement de communication mobile (EE), une capacité à reconnaître une image, et une capacité à reconnaître une couleur.

8. Produit de programme d'ordinateur comprenant un jeu d'instructions agencé, lorsqu'il est exécuté par des moyens de traitement, pour effectuer le procédé selon l'une des revendications précédentes pour permettre l'organisation de l'affichage d'éléments graphiques (GEi), chacun représentant au moins un service, sur un écran tactile (TS) d'un équipement de communication mobile (EE) comprenant au moins un espace de travail (WS) associé à au moins un écran virtuel (VS).

9. Dispositif (D) pour un équipement de communication mobile (EE) comprenant un écran tactile (TS) et au moins un espace de travail (WS) associé à au moins un écran virtuel (VS) auquel des éléments graphiques (GEi) peuvent être rattachés, chaque élément graphique représentant au moins un service, ledit équipement de communication mobile comprenant en outre un capteur (SR) configuré pour capturer des événements concernant l'équipement de communication mobile et un module de détection de gestes (GDM) configuré pour détecter des fragments de gestes sur la base d'informations relatives à des événements d'interaction d'utilisateur détectés par le capteur (SR) et une main d'utilisateur qui tient l'équipement de communication mobile lorsque l'utilisateur tient ledit équipement de communication mobile, ledit dispositif (D) comprenant :
i) un premier moyen de traitement (PM1) agencé pour déterminer un contexte d'utilisateur actuel à partir d'une première information, ledit contexte d'utilisateur actuel étant un contexte dans lequel l'utilisateur est actuellement immergé, choisi dans un groupe comprenant au moins une activité, une localisation, et une heure actuelle,
ii) un deuxième moyen de traitement (PM2) agencé pour déterminer une (des) contrainte(s) situationnelle(s) actuelle(s) à partir d'une seconde information, ladite (lesdites) contrainte(s) situationnelle(s) actuelle(s) étant des caractéristiques de l'environnement limitant l'interaction de l'utilisateur avec l'équipement de communication mobile (EE), chaque seconde information étant choisie dans un groupe se composant de contraintes d'interaction détectées relatives à des limitation des capacités d'interaction de l'utilisateur avec ledit équipement de communication mobile impliquant au moins un parmi : le toucher, la parole, l'ouïe et la vision,
iii) un troisième moyen de traitement (PM3) agencé pour déterminer, pour au moins des éléments choisis desdits éléments graphiques (GEi), des probabilités de faire l'objet d'un accès par ledit utilisateur dans ledit contexte d'utilisateur actuel,
et iv) un quatrième moyen de traitement (PM4) agencé pour rattacher lesdits éléments graphiques (GEi) choisis à des zones d'un écran virtuel (VS) affiché en fonction de leur probabilité d'accès respective, desdites contraintes situationnelles actuelles et dudit contexte d'utilisateur actuel, pour faciliter l'accès auxdits éléments graphiques (GEi) choisis par ledit utilisateur et un élément graphique (GEi) choisi associé à un intervalle de probabilité d'accès le plus élevé étant rattaché à une première zone qui est la plus facile à toucher par un pouce d'une main d'utilisateur qui tient ledit équipement de communication mobile (EE), un élément graphique (GEi) choisi associé à un intervalle de probabilité d'accès plus petit que le plus élevé étant rattaché à une deuxième zone qui peut être touchée facilement par un pouce d'une main d'utilisateur qui tient ledit équipement de communication mobile (EE), et un élément graphique (GEi) choisi associé à un intervalle de probabilité d'accès encore plus petit que le plus élevé étant rattaché à une troisième zone qui peut être touchée relativement facilement par un pouce d'une main d'utilisateur qui tient ledit équipement de communication mobile (EE), des localisations respectives desdites première, deuxième et troisième zones étant déterminées en fonction au moins de la main d'utilisateur qui tient l'équipement de communication mobile.
